Europäisches Patentamt

(19) European Patent Office

Office européen des brevets

(11) Publication number: **0 117 757**
**B1**

(12) **EUROPEAN PATENT SPECIFICATION**

(45) Date of publication of patent specification: **03.12.86**

(51) Int. Cl.⁴: **F 16 C 32/06, F 16 C 32/00**

(21) Application number: **84301284.0**

(22) Date of filing: **28.02.84**

(54) Squeeze bearing assemblies.

(30) Priority: **28.02.83 US 470660**

(43) Date of publication of application:
**05.09.84 Bulletin 84/36**

(45) Publication of the grant of the patent:
**03.12.86 Bulletin 86/49**

(84) Designated Contracting States:
**DE FR GB**

(56) References cited:
**EP-A-0 067 317**
**US-A-3 351 393**

(73) Proprietor: **International Business Machines Corporation**
**Old Orchard Road**
**Armonk, N.Y. 10504 (US)**

(72) Inventor: **Engwall, Mats Anders**
**1551 Sunset Drive**
**Hollister California 95023 (US)**
Inventor: **Mulvany, Richard Burke**
**1613 Fairlawn Avenue**
**San Jose California (US)**

(74) Representative: **Hobbs, Francis John**
**IBM United Kingdom Limited Intellectual Property Department Hursley Park**
**Winchester Hampshire SO21 2JN (GB)**

Courier Press, Leamington Spa, England.

## Description

This invention relates to squeeze bearing assemblies comprising a pair of coaxially arranged bearing members, one of which is disposed within the other.

The article entitled "Compressible Squeeze Films and Squeeze Bearings" by E. O. Salbu in the June 6, 1964 issue of the *Transaction of the ASME Journal of Basic Engineering* is an excellent basic reference for an understanding of the squeeze bearing technology. Since the publication of that article, various bearing assemblies have been suggested which rely on the basic squeeze bearing principle.

Recently, tubular or cylindrical squeeze bearing assemblies have been suggested for the magnetic transducer carriage assembly of the transducer positioning system of a disk file. The function of these positioning systems is to position a magnetic transducer to a particular track on a magnetic disk. The positioning operation involves linear movement of the head over a range of travel of about 2.5 to 5 cm (one to two inches), with very high accuracy. The transducer is mounted on a head-arm that is generally attached to the movable coil of a voice coil actuator. The coil and head-arm are attached to a carriage assembly which functions to precisely guide the head and coil as they are moved along a linear path between track addresses. It is important that the head to disk spacing be controlled since the spacing is critical to the successful recording of data on the disk. It is also important that the recording gap of the magnetic head assume the same angle, e.g. 90°, to the centre line of the track if data is to be written and read accurately.

Conventional ball bearing roller systems that have been associated with disk file head-arm carriage positioning systems operate satisfactorily but have one major disadvantage. That is that they inherently have a static friction problem and variable dynamic friction.

These problems adversely affect access time and transducer positioning accuracy in the disk file. Since cylindrical squeeze bearings do not have these problems, considerable interest has arisen in the use of these bearings for disk file applications.

EP—A—67317 discloses cylindrical squeeze bearing assemblies for disk file actuators. These assemblies comprise a pair of cylindrical members disposed coaxially in a nested relationship. One bearing member is comprised by a piezoelectric transducer which is caused to vibrate, that is, change its cross-sectional shape.

The present invention seeks to provide an improved squeeze bearing assembly which can be more economically manufactured.

A squeeze bearing assembly comprising first and second coaxially arranged bearing members the second bearing member being disposed within the first bearing member, and a driving transducer co-axial with and secured to one of the bearing members, is characterised, according to the invention, by the driving transducer having a cross-section which is of a simpler shape than that of the bearing members and by the one bearing member being secured to points on the driving transducer that experience maximum deflection when the driving transducer is energised.

Application of the invention permits the surfaces of the squeeze bearing members to be given their most efficient shape for the squeeze bearing action, while the driving transducer, which can be a bimorph or a single element piezoceramic driver, can have a cross-section that is relatively easy and hence more economical, to manufacture.

How the invention can be carried out will now be described by way of example, with reference to the accompanying diagrammatic drawings, in which:—

FIG. 1 is a perspective view, partly in section, of a squeeze bearing assembly embodying the present invention;

FIG. 2 is a cross-section of the bearing assembly taken on the line 2—2 of FIG. 1;

FIG. 3 represents the cyclic deflections of the transducer and attached bearing member of the assembly shown in FIG. 2;

FIG. 4 is a cross-section of a squeeze bearing assembly which is a modification of the assembly shown in FIG. 1; and

FIG. 5 is a cross-section of a squeeze bearing assembly which is a further modification of the assembly shown in FIG. 1.

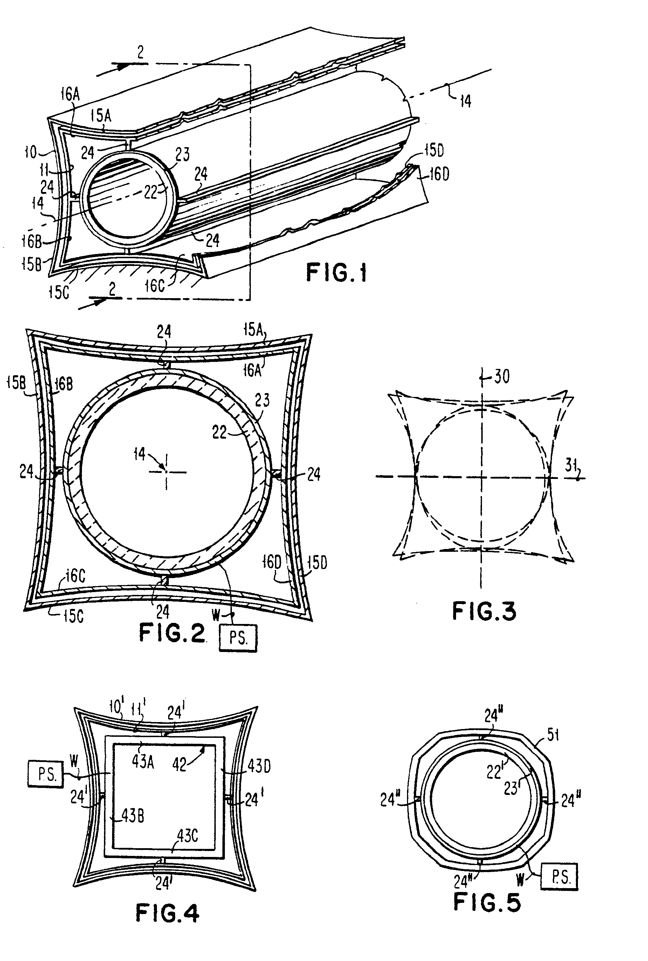

A squeeze bearing assembly (FIG. 1) comprises two bearing members 10 and 11 which are disposed coaxially for relative movement parallel to axis 14 of the assembly. As shown diagrammatically in FIG. 1, bearing member 10 is fixed, while member 11 moves parallel to axis 14. Alternatively, member 10 could be a movable member, with member 11 stationary. The cross-sections of the bearing members 10 and 11: correspond generally to a cuspid, asteroid-like shape having four concave side surfaces 15A through 15D and 16A through 16D, respectively. The spacing between the members 10 and 11, is greatly exaggerated in FIG. 1. The cross-section of the bearing members of the assembly shown in FIG. 1 was selected to provide an arrangement which is relatively stiff in the rotational direction.

The piezoelectric driving member for the bearing assembly shown in FIG. 1 comprises a cylindrical piezoceramic member 22 and a surrounding cylinder 23 which, together with the piezoceramic member, forms a bimorph. If desired, cylinder 23 can function to place the cylindrical piezoceramic member 22 in slight compression, which reduces the possibility of drive member 22 failing from fatigue as discussed in European Patent application number EP—A—0118279, filed concurrently herewith.

Driving member 22 is attached to bearing member 11 by means of short ribs 24. The placement of ribs 24 relative to driving member 22 and driven member 11 is determined by the location of the antinodes of the two vibrating stuctures, that is, the loci of maximum deflection which will be determined by the dimensions of the two interconnected members 22 and 11.

As shown in FIG. 2, the ribs 24 are spaced circumferentially around the bimorph at 90° intervals corresponding to the maximum points of deflection which are, as shown in FIG. 3, along vertical and horizontal reference lines 30 and 31.

FIG. 4 illustrates a bearing assembly which differs from that shown in FIG. 1 in that the cylindrical piezoceramic driving member 22 of FIG. 1 has been replaced by a substantially square driving member 42 which has been assembled using four separate flat piezoceramic pieces 43A through 43D. Member 42 may also be constructed as a bimorph. Driving member 42 is attached to bearing member 11 by means of short longitudinal ribs 24' in a manner identical to that described in connection with FIGS. 1 and 2.

FIG. 5 illustrates a bearing assembly similar to the embodiment of the invention shown in FIG. 1 in that the same cylindrical driving member 22 is employed, but in which cross-sections of the bearing members have been modified. As shown in FIG. 5, driving member 22' is basically identical to cylindrical driving member 22 shown in FIG. 1 and includes the cylinder 23' and longitudinal ribs 24'' which attach bearing member 51 to the cylinder 23'. The cross-sectional shape of the bearing members shown in FIG. 5 is generally convex, while that of the members shown in the other figures is generally concave. Either cross-section operates satisfactorily. In addition, the bearing members may have a square cross-section and a circular-shaped driving member.

The various driving members are provided with a suitable means to activate the piezoceramic material at the desired frequency to establish the bearing relationship between the bearing surfaces. This means is represented schematically in the drawing as a signal lead W from the driving member to a power source PS.

## Claims

1. A squeeze bearing assembly comprising first and second coaxially arranged bearing members (10, 11), the second bearing member (11) being disposed within the first bearing member (10), and a driving transducer (22) co-axial with and secured to one of the bearing members (10, 11), characterised by the driving transducer having a cross-section which is of a simpler shape than that of the bearing members and by the one bearing member being secured to points on the driving transducer that experience maximum deflection when the driving transducer is energised.

2. A squeeze bearing assembly as claimed in claim 1, in which the driving transducer is secured to the second bearing member (11).

3. A squeeze bearing assembly as claimed in claim 1 or claim 2, in which the driving transducer has a circular cross-section and the bearing members have non-circular cross-sections.

4. A squeeze bearing assembly as claimed in claim 1 or claim 2, in which both the bearing members and the driving transducer have non-circular cross-sections.

5. A squeeze bearing assembly as claimed in any preceding claim, in which the bearing members have cross-sections which are symmetrical about a plane containing the axis of the assembly.

6. A squeeze bearing assembly as claimed in claim 5, in which the bearing members have cross-sections which are symmetrical about each of a pair of intersecting planes containing the axis of the assembly.

7. A squeeze bearing assembly as claimed in claim 6, in which the pair of intersecting planes cross at 90° to one another.

8. A squeeze bearing assembly as claimed in claim 7, in which the bearing members have a four-lobed asteroid shaped cross-section.

9. A squeeze bearing assembly as claimed in any preceding claim, in which the driving transducer is a piezoceramic bimorph.

## Patentansprüche

1. Fluidlageraufbau, bei welchem Druck durch Schwingungen erzeugt wird, mit einem ersten und zweiten Lagerelement (10, 11), welche koaxial angeordnet sind, wobei das zweite Lagerelement (11) innerhalb des ersten Lagerelements (10) angeordnet ist, und einem antreibenden Wandler (22), welcher zu einem der Lagerelement (10, 11) koaxial und an diesem befestigt ist, dadurch gekennzeichnet, daß der antreibende Wandler einen Querschnitt hat, welcher von einfacherer Form als diejenige der Lagerelemente ist, und daß das eine Lagerelement an Punkten auf dem antreibenden Wandler befestigt ist, welche eine maximale Durchbiegung erfahren, wenn der antreibende Wandler erregt wird.

2. Lageraufbau nach Anspruch 1, bei welchem der antreibende Wandler am zweiten Lagerelement (11) befestigt ist.

3. Lageraufbau nach Anspruch 1 oder Anspruch 2, bei welchem der antreibende Wandler einen kreisförmigen Querschnitt hat und die Lagerelemente nicht-kreisförmige Querschnitte haben.

4. Lageraufbau nach Anspruch 1 oder Anspruch 2, bei welchem sowohl die Lagerelemente als auch der antreibende Wandler nicht-kreisförmige Querschnitte haben.

5. Lageraufbau nach irgendeinem vorstehenden Anspruch, bei welchem die Lagerelemente Querschnitte haben, welche symmetrisch zu einer die Achse des Aufbaus enthaltenden Ebene sind.

6. Lageraufbau nach Anspruch 5, bei welchem die Lagerelemente Querschnitte haben, welche symmetrisch zu einer jeden eines Paares von die Achse des Aufbaus enthaltenden sich schneidenden Ebenen sind.

7. Lageraufbau nach Anspruch 6, bei welchem das Paar sich schneidender Ebenen sich unter 90° schneidet.

8. Lageraufbau nach Anspruch 7, bei welchem die Lagerelemente einen vierzipfligen sternartigen Querschnitt haben.

9. Lageraufbau nach irgendeinem vorstehenden Anspruch, bei welchem der antreibende Wandler ein piezokeramisches Zweielement ist.

## Revendications

1. Un ensemble de palier compressible comprenant des premier et second éléments de palier (10, 11) disposés coaxialement, le second élément de palier (11) étant disposé à l'intérieur du premier élément de palier (10), et un transducteur d'entraînement (22) coaxial avec et fixé sur un des éléments de palier (10, 11), caractérisé en ce que le transducteur d'entraînement a une section droite qui a une forme plus simple que celle des éléments de palier et en ce qu'un élément de palier est fixé sur le transducteur d'entraînement en des points qui sont soumis à une flexion maximale quand le transducteur d'entraînement est excité.

2. Un ensemble de palier compressible tel que revendiqué dans la revendication 1, dans lequel le transducteur d'entraînement est fixé sur le second élément de palieur (11).

3. Un ensemble de palier compressible tel que revendiqué dans la revendication 1 ou la revendication 2, dans lequel le transducteur d'entraînement a une section droite circulaire et les éléments de palier ont des sections droites non circulaires.

4. Un ensemble de palier compressible tel que revendiqué dans la revendication 1 ou la revendication 2, dans lequel les deux éléments de palier, et le transducteur d'entraînement ont des sections droites non circulaires.

5. Un ensemble de palier compressible tel que revendiqué dans l'une quelconque des revendications précédentes, dans lequel les éléments de palier ont des sections droites qui sont symétriques par rapport à un plan pasant par l'axe de l'ensemble.

6. Un ensemble de palier compressible tel que revendiqué dans la revendication 5, dans lequel les éléments de palier ont des sections droites qui sont symétriques par rapport à chacun de deux plans d'intersection passant par l'axe de l'ensemble.

7. Un ensemble de palier compressible tel que revendiqué dans la revendication 6, dans lequel les deux plans d'intersection se coupent à 90°.

8. Un ensemble de palier compressible tel que revendiqué dans la revendication 7 dans lequel les éléments de palier ont une section droite en forme d'astéroïde à quatre lobes.

9. Un ensemble de palier compressible tel que revendiqué dans l'une quelconque des revendications précédentes, dans lequel le transducteur d'entraînement est un bimorphe piézocéramique.

**FIG.1**

**FIG.2** PS.

**FIG.3**

**FIG.4**

**FIG.5**